# EUROPÄISCHE PATENTSCHRIFT

(11) **EP 2 819 113 B1**
(45) Veröffentlichungstag und Bekanntmachung des Hinweises auf die Patenterteilung: **03.08.2016**
(21) Anmeldenummer: 14172166.2
(22) Anmeldetag: 12.06.2014
(51) Int. Cl.: G08G 1/017, G08G 1/04

(54) **Messanlage zur Erfassung eines einem Fahrzeug zugeordneten Kennzeichens bei Passage eines Messquerschnittes einer Fahrbahn**
Measuring device for detecting a licence plate of a vehicle passing a measuring section of a lane
Installation de mesure destinée à l'enregistrement d'une plaque d'immatriculation d'un véhicule lors du passage d'une section de mesure

(30) Priorität: 28.06.2013 DE 102013212761
(43) Veröffentlichungstag der Anmeldung: 31.12.2014
(73) Patentinhaber: Siemens Aktiengesellschaft, 80333 München (DE)
(72) Erfinder: Glufke, Jens, 85614 Eglharting (DE); Pouh, Stephan, 82061 Neuried (DE)

(56) Entgegenhaltungen:
- WO-A1-97/50067
- US-A1- 2008 031 522
- US-A1- 2008 118 110
- US-A1- 2012 155 712

## Beschreibung

Die Erfindung bezieht sich auf eine Messanlage zur Erfassung eines einem Fahrzeug zugeordneten Kennzeichens bei Passage eines Messquerschnittes einer Fahrbahn nach dem Oberbegriff des Patentanspruches 1.

Derartige Messanlagen kommen in der Straßenverkehrstechnik zunehmend und in vielfältigen Anwendungen zum Einsatz. So sind aus den Übersetzungen europäischer Patentschriften DE 697 24 133 T2 und DE 602 18 982 T2 Verfahren und Vorrichtungen zum Lesen von Nummernschildern oder zur Erfassung anderer äußerer Charakteristika von Fahrzeugen in einer Mautstelle bekannt. Die europäische Patentschrift EP 2 220 634 B1 offenbart den Einsatz der automatischen Kennzeichenerkennung für die Erfassung einer Geschwindigkeitsübertretung durch Bildaufnahme des Nummernschildes am Anfang und am Ende einer Überwachungsstrecke. Die Offenlegungsschrift DE 10 2009 010 806 A1 zeigt ein Verfahren und eine Vorrichtung zur Störfallerkennung auf einer Straßenstrecke, insbesondere innerhalb eines Tunnels, wobei an den Streckenenden mittels Videokameras Fahrzeuge identifizierende Merkmalsdaten, beispielsweise Nummernschilder, erfasst und abgeglichen werden, um die Anzahl an auf der Straßenstrecke befindlichen Fahrzeugen für eine Störfallerkennung zu bestimmen.

Aus US 2008/118110 A1 ist ebenso wie aus US 2008/031522 A1 und WO 97/50067 A1 eine gattungsgemäße Anlage zur Erfassung eines einen Fahrzeug zugeordneten Kennzeichens bei einer Passage eines Messquerschnittes einer Fahrbahn bekannt. Dementsprechend umfasst die Messanlage eine erste und eine zweite Videokamera zur Aufnahme von Videobildern des Messquerschnittes, die derart angeordnet und ausgerichtet sind, dass auf aufgenommenen Videobildern ein das Kennzeichen darstellendes erstes bzw. zweites Kennzeichenschild des Fahrzeugs abgebildet ist. Ferner umfasst die Messanlage ein Bildauswertungssystem, dass dazu ausgebildet ist, auf den aufgenommenen Videobildern des ersten und zweiten Kennzeichenschildes eine erste bzw. zweite Zeichenfolge zu bestimmen und anhand der ersten und zweiten Zeichenfolge das dem passierenden Fahrzeug zuzuordnende Kennzeichen zu bestimmen.

In allen Einsatzfällen kommt es zunächst darauf an, aus aufgenommenen Videobildern des Messquerschnittes ein Kennzeichen eines Fahrzeugs mit hoher Zuverlässigkeit zu erkennen und dieses dem richtigen Fahrzeug zuzuordnen. Die Erkennungszuverlässigkeit kann durch verschmutzte oder beschädigte Kennzeichenschilder, durch die Sicht beeinträchtigende Witterungsbedingungen oder auch durch unzureichende Algorithmen der Zeichenerkennungssoftware beeinträchtigt werden. Ferner kann die Fahrzeugzuordnung des Kennzeichens durch Spurwechselvorgänge oder eine hohe Verkehrsdichte mit kurzen Fahrzeugfolgeabständen im Bereich des Messquerschnittes erschwert werden.

Der Erfindung liegt daher die Aufgabe zugrunde, eine gattungsgemäße Messanlage bereitzustellen, mit der die Erfassung eines einem Fahrzeug zugeordneten Kennzeichens bei Passage eines Messquerschnittes einer Fahrbahn verbessert wird.

Die Aufgabe wird gelöst durch eine Messanlage der eingangs genannten Art mit den im kennzeichnenden Teil des Patentanspruches 1 angegebenen Merkmalen. Demnach umfasst die Messanlage neben der ersten Videokamera zur Aufnahme von Videobildern des Messquerschnittes, die derart angeordnet und ausgerichtet ist, dass auf aufgenommenen Videobildern ein das Kennzeichen darstellendes erstes Kennzeichenschild des Fahrzeugs abgebildet ist, eine zweite Videokamera zur Aufnahme von Videobildern des Messquerschnittes, die derart angeordnet und ausgerichtet ist, dass auf aufgenommenen Videobildern ein das Kennzeichen darstellendes zweites Kennzeichenschild des Fahrzeugs abgebildet ist. Ferner umfasst die Messanlage ein Bildauswertungssystem, das dazu ausgebildet ist, aus den aufgenommenen Videobildern des ersten Kennzeichenschildes eine erste Zeichenfolge zu bestimmen, aus den aufgenommenen Videobildern des zweiten Kennzeichenschildes eine zweite Zeichenfolge zu bestimmen und anhand der ersten und zweiten Zeichenfolge das dem passierenden Fahrzeug zuzuordnende Kennzeichen zu bestimmen. Indem die Zeichenfolgen von zwei unterschiedlichen Kennzeichenschildern eines passierenden Fahrzeugs bestimmt werden, kann davon ausgegangen werden, dass wenigstens eine der Zeichenfolgen mit ausreichender Wahrscheinlichkeit dem Kennzeichen des Fahrzeugs entspricht. Andernfalls stehen zwei Zeichenfolgen für eine weitere Auswertung durch gegenseitigen Vergleich oder durch Abgleich mit weiteren Datenquellen zur Verfügung, anhand der das Kennzeichen des Fahrzeugs bestimmt werden kann. In jedem Fall verbessert sich die Erfassung eines einem Fahrzeug zuzuordnenden Kennzeichens erheblich gegenüber der Videoerfassung und Auswertung von nur einem einzigen Kennzeichenschild. Desweiteren sind für eine Fahrbahn mit mehreren Fahrstreifen jedem der Fahrstreifen jeweils eine erste Videokamera, eine zweite Videokamera und ein Fahrzeugdetektor zugeordnet, wobei aneinander grenzenden Fahrstreifen zugeordnete Videokameras derart ausgerichtet und vom Messquerschnitt beabstandet sind, dass deren aufgenommene Videobilder wenigstens teilweise überlappen und einen gemeinsamen Bildausschnitt im Bereich der Fahrstreifengrenze aufweisen, dessen Breite mindestens der Breite eines Kennzeichenschildes beträgt. Hierdurch wird sichergestellt, dass Kennzeichen nicht nur von spurtreu fahrenden Fahrzeugen sondern auch von Fahrzeugen, die bei Passage des Messquerschnittes einen Fahrstreifenwechsel vollziehen, erfasst werden.

In einer vorteilhaften Ausführungsform der erfindungsgemäßen Messanlage ist die erste Videokamera stromab des Messquerschnittes angeordnet und entgegen einer Fahrtrichtung des Fahrzeugs auf den Messquerschnitt ausgerichtet, um das an einer Fahrzeugfront montierte erste Kennzeichenschild aufzunehmen, wobei die zweite Videokamera stromauf des Messquerschnittes angeordnet und in Fahrtrichtung des Fahrzeugs auf den Messquerschnitt ausgerichtet ist, um das an einem Fahrzeugheck montierte zweite Kennzeichenschild aufzunehmen. Diese Anordnung und Ausrichtung der Videokameras ermöglicht die gleichzeitige oder nahezu gleichzeitige Aufnahme von Videobildern ein und desselben Fahrzeugs, wenn dieses den Messquerschnitt passiert. Hierdurch kann das erfasste Kennzeichen eindeutig einem bestimmten Fahrzeug zugeordnet werden.

In einer bevorzugten Ausgestaltung der erfindungsgemäßen Messanlage ist dem Messquerschnitt ein Fahrzeugdetektor zugeordnet, der dazu ausgebildet ist, die Einfahrt eines Fahrzeugs in den Messquerschnitt von der Ausfahrt des Fahrzeugs aus dem Messquerschnitt zeitlich aufzulösen, und der mit der ersten und der zweiten Videokamera derart wirkverbunden ist, dass eine Aufnahme durch die erste Videokamera bei Einfahrt des Fahrzeugs in den Messquerschnitt und eine Aufnahme durch die zweite Videokamera bei Ausfahrt des Fahrzeugs aus dem Messquerschnitt auslösbar ist. Mithilfe des Fahrzeugdetektors können die Videoaufnahmen aus den beiden Aufnahmerichtungen zeitlich gesteuert und durch das das zu erfassende Kennzeichen tragende Fahrzeug selbst ausgelöst werden. Damit kann die Wahrscheinlichkeit, mit der ein bestimmtes Kennzeichen einem Fahrzeug zugeordnet wird, erhöht werden.

In einer bevorzugten Ausführungsform der erfindungsgemäßen Messanlage ist für eine Fahrbahn, neben welcher ein angrenzender Seitenstreifen angeordnet ist, dem Seitenstreifen ein Fahrzeugdetektor zugeordnet, wobei eine erste und zweite Videokamera derart ausgerichtet und vom Messquerschnitt beabstandet sind, dass auf deren den Messquerschnitt aufgenommenen Videobildern auch der Seitenstreifen abgebildet ist. Hierdurch kann vermieden werden, dass Kennzeichen von versehentlich oder absichtlich den Messquerschnitt auf dem Seitenstreifen umfahrenden Fahrzeugen nicht erfasst werden.

In einer weiteren vorteilhaften Ausführungsform der erfindungsgemäßen Messanlage ist das Bildauswertungssystem dazu ausgebildet, anhand eines Zeichenvergleichs zu überprüfen, ob es sich bei der ersten Zeichenfolge und der zweiten Zeichenfolge um eine übereinstimmende Zeichenfolge handelt, und bei festgestellter Übereinstimmung die übereinstimmende Zeichenfolge dem passierenden Fahrzeug als Kennzeichen zuzuordnen. Bei übereinstimmenden Zeichenfolgen, kann mit hoher Wahrscheinlichkeit davon ausgegangen werden, dass diese dem Kennzeichen des passierenden Fahrzeugs entspricht.

Das Bildauswertungssystem der erfindungsgemäßen Messanlage ist vorzugsweise dazu ausgebildet, für eine bestimmte Zeichenfolge ein Konfidenzniveau zu berechnen, das die Wahrscheinlichkeit angibt, mit welcher die Zeichenfolge mit dem durch das Kennzeichenschild dargestellten Kennzeichen übereinstimmt, und bei nicht festgestellter Übereinstimmung der ersten mit der zweiten Zeichenfolge deren Konfidenzniveaus mit einem vorgebbaren Schwellenwert zu vergleichen, und diejenige der Zeichenfolgen dem passierenden Fahrzeug als Kennzeichen zuzuordnen, deren Konfidenzniveau den Schwellenwert übersteigt. Erkennt das Bildauswertungssystem eine Zeichenfolge mit sehr hohem Konfidenzniveau, kann man davon ausgehen, dass diese dem Kennzeichen des passierenden Fahrzeugs entspricht. Die mit zu geringem Konfidenzniveau bestimmte Zeichenfolge kann verworfen werden. Eine Ausnahme bildet der Fall, dass beide Zeichenfolgen mit einem über dem Schwellenwert liegenden Konfidenzniveau bestimmt wurden, diese aber nicht übereinstimmen.

Das Bildauswertungssystem der erfindungsgemäßen Messanlage ist ferner vorzugsweise dazu ausgebildet, bei sowohl nicht festgestellter Übereinstimmung der ersten mit der zweiten Zeichenfolge als auch bei nicht festgestellter Überschreitung des Schwellenwertes durch die Konfidenzniveaus der Zeichenfolgen, eine Kombination aus erster und zweiter Zeichenfolge auf Übereinstimmung mit einer aus einer Vielzahl an in einer Datenbank hinterlegten Kombinationen, deren Zeichenfolgen als übereinstimmende Zeichenfolge verifiziert sind, zu überprüfen, und bei festgestellter Übereinstimmung die übereinstimmende Zeichenfolge dem passierenden Fahrzeug als Kennzeichen zuzuordnen. In dieser Datenbank sind all diejenigen Kombinationen aus ersten und zweiten Zeichenfolgen abgelegt, die zwar automatisch nicht als übereinstimmend erkannt wurden, jedoch nach persönlicher Beurteilung als zusammengehörend bewertet wurden. Hierzu gehören beispielsweise durch Augenkontrolle einer Bedienperson als übereinstimmend verifizierte Zeichenfolgen als auch solche Kombinationen von unterschiedlichen Kennzeichen, die sich daraus ergeben, dass beispielsweise Zugmaschine und gekoppelter Anhänger unterschiedliche Kennzeichen aufweisen.

Das Bildauswertungssystem der erfindungsgemäßen Messanlage weist vorzugsweise Bildausgabemittel zur vergleichenden Ausgabe von aufgenommenen Videobildern des ersten Kennzeichenschildes mit solchen des zweiten Kennzeichenschildes des Fahrzeugs sowie Eingabemittel auf, die es einer Bedienperson erlauben, eine Kombination aus erster und zweiter, anhand des Bildvergleichs als mit dem Kennzeichen übereinstimmend verifizierter Zeichenfolge in der Datenbank abzuspeichern. Mittels Zusammenwirken der Bildausgabemittel und Eingabemittel für die Datenbank, können durch eine Expertenkontrolle tatsächlich zusammengehörende Zeichenfolgen, die algorithmisch nicht als solche erkannt wurden, zusammengeführt werden und stehen als verifizierte Zeichenkombination in der Datenbank für weitere Kennzeichenerfassungen zur Verfügung.

Weitere Eigenschaften und Vorteile der Erfindung ergeben sich aus nachfolgender Beschreibung eines Ausführungsbeispiels anhand der Zeichnungen, in deren
- FIG 1: ein mit einer erfindungsgemäßen Messanlage ausgestatteter Messquerschnitt einer Fahrbahn in Draufsicht und
- FIG 2: ein Verfahrensablaufdiagramm der Funktionsweise einer erfindungsgemäßen Messanlage
schematisch veranschaulicht sind.

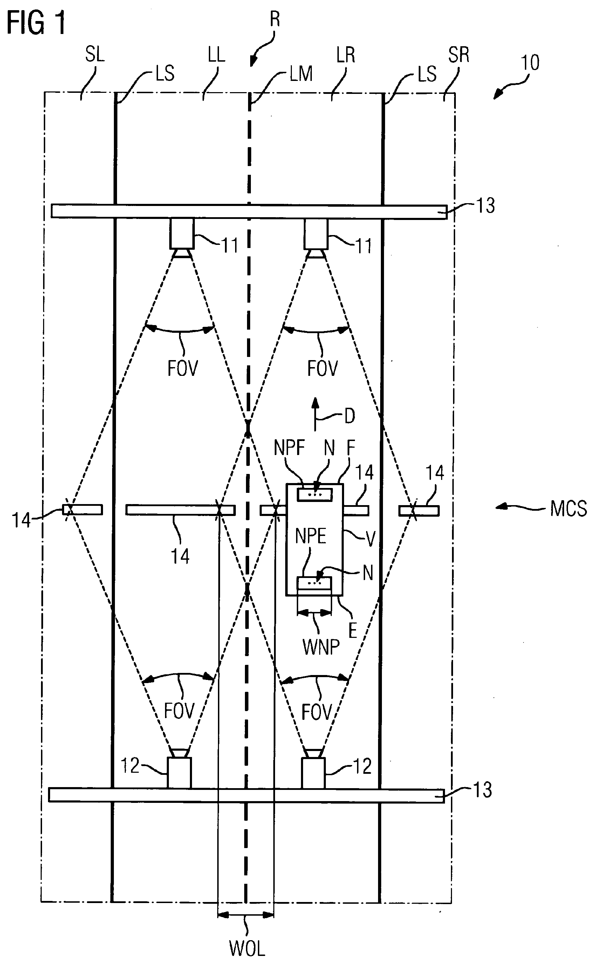

Gemäß FIG 1 ist an einem eine mehrstreifige Fahrbahn R überspannenden Messquerschnitt MCS eine Messanlage 10 angeordnet. Die Messanlage 10 erfasst Kennzeichen N, die den Messquerschnitt MCS passierenden Fahrzeugen V zugeordnet sind. Bei den Kennzeichen N handelt es sich um amtliche Zulassungskennzeichen der Fahrzeuge V, die einen Rückschluss auf den Halter des Fahrzeugs V ermöglichen. Ein Kennzeichen N weist eine Zeichenfolge von Buchstaben und Ziffern auf, die durch ein an einer Fahrzeugfront F montiertes Kennzeichenschild NPF und durch ein an einem Fahrzeugheck E montiertes Kennzeichenschild NPE dargestellt werden. Die Fahrbahn R umfasst einen linken Fahrstreifen LL und einen rechten Fahrstreifen LR, die durch eine unterbrochene Leitlinie LM voneinander abgegrenzt sind und auf welchen sich Fahrzeuge V in gleicher Fahrtrichtung D mit der Möglichkeit eines Fahrstreifenwechsels bewegen. Seitlich der Fahrbahn R verlaufen ein linker Seitenstreifen SL und ein rechter Seitenstreifen SR, von welchen die Fahrbahn R jeweils mittels durchgehender Randlinien LS abgegrenzt sind. Die Messanlage 10 kann beispielsweise einem Mauterhebungssystem, einem Geschwindigkeitsüberwachungssystem oder einem anderen Verkehrsüberwachungssystem zugeordnet sein.

Die Messanlage 10 umfasst für jeden Fahrstreifen LL und LR eine erste Videokamera 11, die jeweils stromab des Messquerschnittes MCS angeordnet sind, und eine zweite Videokamera 12, die jeweils stromauf des Messquerschnittes MCS angeordnet sind. Die Videokameras 11 und 12 sind an Querriegeln 13 zweier die Fahrbahn R überspannender Trägerbrücken montiert und derart ausgerichtet, dass ihre Sichtfelder FOV den Bereich des Messquerschnittes MCS erfassen. Dabei sind die ersten Videokameras 11 mit ihren Sichtfeldern FOV entgegen der Fahrtrichtung D und die zweiten Videokameras 12 mit ihren Sichtfeldern FOV in Fahrtrichtung D ausgerichtet. Die Sichtfelder FOV der beiden ersten Videokameras 11 erfassen jeweils einen Fahrstreifen LL bzw. LR und überlappen sich im Bereich des Messquerschnittes MCS auf einer Überlappungsbreite WOL, die größer als eine Schilderbreite WNP eines Kennzeichenschildes NPF bzw. NPE bemessen ist. Außerdem überlappen die Sichtfelder FOV der Videokameras 11 bzw. 12 im Bereich des Messquerschnittes MCS den jeweils benachbarten Seitenstreifen SL bzw. SR. Durch diese Anordnung und Ausrichtung von ersten und zweiten Videokameras 11 bzw. 12 werden Videobilder des Messquerschnittes MCS aufgenommen, auf welchen sowohl das erste als auch das zweite Kennzeichenschild NPF und NPE eines Fahrzeugs V abgebildet sind; und zwar nicht nur, wenn ein Fahrzeug den Messquerschnitt MCS spurtreu auf einem der beiden Fahrstreifen LL oder LR passiert, sondern auch, wenn das Fahrzeug V bei der Passage des Messquerschnittes MCS den Fahrstreifen wechselt, etwa bei einem Ausweich- oder Überhohlmanöver, oder einen der Seitenstreifen SL oder SR befährt.

Die Messanlage 10 umfasst ferner im Bereich des Messquerschnittes MCS angeordnete Fahrzeugdetektoren 14, die vorzugsweise als im Fahrbahnbelag eingelassene Induktionsschleifen aber auch als Radardetektoren, Infrarotsensoren, oder dergleichen, ausgebildet sein können. Im dargestellten Ausführungsbeispiel ist jedem Fahrstreifen LL und LR sowie jedem Seitenstreifen SL und SR ein Fahrzeugdetektor 14 zugeordnet, die dazu ausgebildet sind, eine Messquerschnittpassage eines Fahrzeugs V zu detektieren. Aufgrund der ansteigenden bzw. abfallenden Signalflanke eines Fahrzeugdetektors 14 beim Einfahren in den bzw. bei Ausfahren aus dem Messquerschnitt MCS können diese beiden Phasen der Fahrzeugpassage zeitlich aufgelöst und als Auslöser für den Bildaufnahmestart des ersten Kennzeichenschildes NPF durch eine erste Videokamera 11 und zeitlich versetzt des zweiten Kennzeichenschildes NPE durch eine zweite Videokamera 12 verwendet werden.

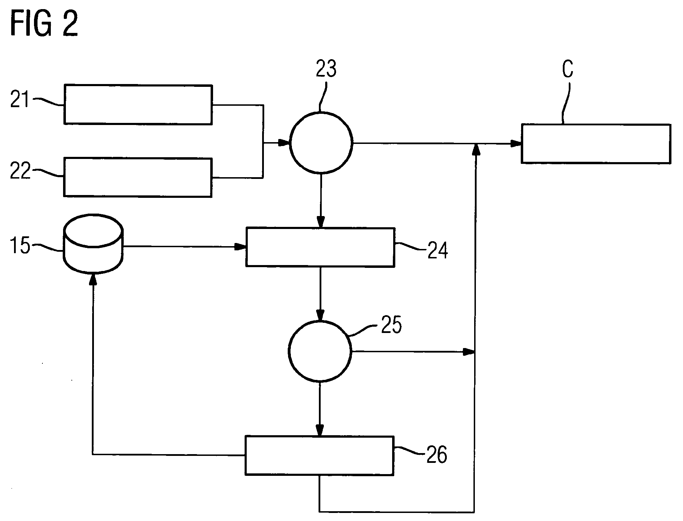

Die aufgenommenen Videobilder werden einem nicht dargestellten Bildauswertungssystem zugeführt, welches zum Teil in den Videokameras 11 und 12 und/oder zum Teil in einer gesonderten Baueinheit untergebracht ist und Rechen- und Speichermittel zur elektronischen Verarbeitung der die Videobilder repräsentierenden Bilddaten umfasst. Zu den Rechenmitteln gehören insbesondere ausführbare Datenverarbeitungsprogramme zur optischen Zeichenerkennung, die an sich bekannt sind. Zur Funktionsweise der Bildauswertung wird nun auf FIG 2 verwiesen.

Das Bildauswertungssystem ist nun dazu ausgebildet, folgende Verfahrensschritte auszuführen: In einem ersten Schritt 21 wird aus den aufgenommenen Videobildern des ersten Kennzeichenschildes NPF eine erste Zeichenfolge bestimmt. In einem zweiten Schritt 22 wird aus den aufgenommenen Videobildern des zweiten Kennzeichenschildes NPE eine zweite Zeichenfolge bestimmt. Aufgrund der Anordnungen und Ausrichtungen der Videokameras 11 und 12 sowie der durch die Fahrzeugdetektoren 14 ausgelösten Videoaufnahmen kann sicher davon ausgegangen werden, dass das erste und zweite Kennzeichenschild NPF und NPE zu ein und demselben Fahrzeug V gehört, wobei hier unter Fahrzeug V ein Einzelfahrzeug aber auch ein gekoppelter Fahrzeugverbund verstanden wird. Bei der Bestimmung des diesem Fahrzeug V zuzuordnenden Kennzeichens N werden nun erfindungsgemäß die erste und zweite Zeichenfolge miteinander verglichen. Hierzu werden in einem dritten Schritt 23 die erste und die zweite Zeichenfolge auf Übereinstimmung überprüft. Handelt es sich um übereinstimmende Zeichenfolgen, so wird diese dem passierenden Fahrzeug V als Kennzeichen N zugeordnet. Das dem Fahrzeug V zugeordnete Kennzeichen N kann dann einer Zentrale C des der Messanlage 10 zugeordneten Verkehrsüberwachungssystems, beispielsweise eines Mauterhebungssystems, zur weiteren Verarbeitung zugeführt werden.

Wird im Schritt 23 keine Übereinstimmung der ersten mit der zweiten Zeichenfolge festgestellt, kann das unterschiedliche Ursachen haben. So kann aufgrund von verschmutzten oder beschädigten Kennzeichenschildern, aufgrund von die Videoaufnahmen beeinträchtigenden Witterungsbedingungen oder aufgrund von Unzulänglichkeiten des Zeichenerkennungsprogramms eine Übereinstimmung der bestimmten Zeichenfolgen nicht festgestellt werden. Das Bildauswertungssystem ist nun dazu ausgebildet, ein Konfidenzniveau der erfolgten Zeichenbestimmung zu berechnen. Das Konfidenzniveau gibt an, mit welcher Wahrscheinlichkeit die bestimmte Zeichenfolge mit dem durch das Kennzeichenschild NPF oder NPE dargestellten Kennzeichen N übereinstimmt. Das es genügt, die Zeichenfolge nur eines der beiden Kennzeichenschilder NPF oder NPE sicher oder mit hohem Konfidenzniveau zu bestimmen, werden in Erweiterung von Schritt 23 die Konfidenzniveaus, mit der die erste und zweite Zeichenfolge bestimmt wurden, mit einem vordefinierbaren Schwellenwert verglichen. Wenn nun eines der beiden Konfidenzniveaus den Schwellenwert übersteigt, das andere aber nicht, dann wird diejenige Zeichenfolge dem passierenden Fahrzeug V als Kennzeichen N zugeordnet, deren Konfidenzniveau den Schwellenwert überstiegen hat. Die andere Zeichenfolge wird verworfen und das zugeordnete Kennzeichen N kann der Zentrale C zugeführt werden.

Kann eine Übereinstimmung der beiden Zeichenfolgen aufgrund zu geringer Konfidenzniveaus nicht festgestellt werden oder wird umgekehrt aufgrund hoher Konfidenzniveaus festgestellt, dass die bestimmten Zeichenfolgen tatsächlich nicht übereinstimmen, so wird überprüft, ob eine aus erster und zweiter Zeichenfolge gebildete Kombination mit einer vorab verifizierten Kombination an Zeichenfolgen, die in einer Datenbank 15 des Bildauswertungssystems hinterlegt sind, übereinstimmt. Hierzu erfolgt in einem Schritt 24 eine automatisierte Abfrage der Datenbank 15, in der Kombinationen von Zeichenfolgen gespeichert sind, die bereits als übereinstimmende Zeichenfolgen verifiziert wurden. In einem Schritt 25 wird überprüft, ob die zu überprüfende Kombination an Zeichenfolgen mit einer der gespeicherten Kombinationen übereinstimmt. Wird eine Übereinstimmung festgestellt, so wird diejenige übereinstimmende Zeichenfolge, die der gefundenen Kombination zugeordnet wurde, dem passierenden Fahrzeug V als Kennzeichen N zugeordnet. Das Kennzeichen N wird der Zentrale C zugeführt.

Die Befüllung der Datenbank 15 mit verifizierten Kombinationen an Zeichenfolgen erfolgt in selbst lernender Weise. Wird in den Schritten 24 und 25 keine übereinstimmende Kombination gefunden, so werden die Videobilder, aus welchen die erste und zweite Zeichenfolge bestimmt wurden, nicht dargestellten Bildausgabemitteln des Bildauswertungssystems zugeführt. Die Videobilder werden hierbei einer Bedienperson zur vergleichenden Inaugenscheinnahme ausgegeben. Erkennt die Bedienperson durch Bildvergleich trotz niedriger Konfidenzniveaus die Zeichenfolgen als übereinstimmend, so wird die übereinstimmende Zeichenfolge mit der Kombination der dem Vergleich zugrunde gelegten Zeichenfolgen in die Datenbank 15 abgelegt. Ebenso wird eine Kombination von Zeichenfolgen in die Datenbank abgelegt, wenn die Bedienperson erkennt, dass die beiden Zeichenfolgen nicht übereinstimmen aber dennoch zusammen gehören, weil das passierende Fahrzeug V eine Zugmaschine mit einem ersten Kennzeichen N und einen an diese gekuppelten Anhänger mit einem zweiten Kennzeichen aufweist. Diese Kombination an Zeichenfolgen wird beispielsweise mit dem ersten Kennzeichen N in der Datenbank 15 hinterlegt. In beiden Fällen wird die anhand des Bildvergleichs als übereinstimmend verifizierte Zeichenfolge dem passierenden Fahrzeug V als Kennzeichen N zugeordnet. Dieses wird an die Zentrale C übermittelt.

## Patentansprüche

1. Messanlage (10) zur Erfassung eines einem Fahrzeug (V) zugeordneten Kennzeichens (N) bei Passage eines Messquerschnittes (MCS) einer Fahrbahn (R), umfassend eine erste Videokamera (11) zur Aufnahme von Videobildern des Messquerschnittes (MCS), die derart angeordnet und ausgerichtet ist, dass auf aufgenommenen Videobildern ein das Kennzeichen (N) darstellendes erstes Kennzeichenschild (NPF) des Fahrzeugs (V) abgebildet ist, eine zweite Videokamera (12) zur Aufnahme von Videobildern des Messquerschnittes (MCS), die derart angeordnet und ausgerichtet ist, dass auf aufgenommenen Videobildern ein das Kennzeichen (N) darstellendes zweites Kennzeichenschild (NPE) des Fahrzeugs (V) abgebildet ist, ein Bildauswertungssystem, das dazu ausgebildet ist, aus den aufgenommenen Videobildern des ersten Kennzeichenschildes (NPF) eine erste Zeichenfolge zu bestimmen, aus den aufgenommenen Videobildern des zweiten Kennzeichenschildes (NPR) eine zweite Zeichenfolge zu bestimmen und anhand der ersten und zweiten Zeichenfolge das dem passierenden Fahrzeug (V) zuzuordnende Kennzeichen (N) zu bestimmen, **dadurch gekennzeichnet, dass** für eine Fahrbahn (R) mit mehreren Fahrstreifen (LL, LR) jedem der Fahrstreifen (LL, LR) jeweils eine erste Videokamera (11), eine zweite Videokamera (12) und ein Fahrzeugdetektor (14) zugeordnet sind, wobei aneinandergrenzenden Fahrstreifen (LL, LR) zugeordnete Videokameras (11, 12) derart ausgerichtet und vom Messquerschnitt (MCS) beabstandet sind, dass deren aufgenommene Videobilder wenigstens teilweise überlappen und einen gemeinsamen Bildausschnitt im Bereich der Leitlinie (LM) aufweisen, dessen Breite mindestens der Breite (WNP) eines Kennzeichenschildes (NPF, NPE) beträgt.

2. Messanlage (10) nach Anspruch 1, wobei die erste Videokamera (11) stromab des Messquerschnittes (MCS) angeordnet und entgegen einer Fahrtrichtung (D) des Fahrzeugs (V) auf den Messquerschnitt (MCS) ausgerichtet ist, um das an einer Fahrzeugfront (F) montierte erste Kennzeichenschild (NPF) aufzunehmen, und wobei die zweite Videokamera (12) stromauf des Messquerschnittes (MCS) angeordnet und in Fahrtrichtung (D) des Fahrzeugs (V) auf den Messquerschnitt (MCS) ausgerichtet ist, um das an einem Fahrzeugheck (E) montierte zweite Kennzeichenschild (NPE) aufzunehmen.

3. Messanlage (10) nach Anspruch 1 oder 2, wobei dem Messquerschnitt (MCS) ein Fahrzeugdetektor (14) zugeordnet ist, der dazu ausgebildet ist, die Einfahrt eines Fahrzeugs (V) in den Messquerschnitt (MCS) von der Ausfahrt des Fahrzeugs (V) aus dem Messquerschnitt (MCS) zeitlich aufzulösen, und der mit der ersten und der zweiten Videokamera (11, 12) derart wirkverbunden ist, dass eine Aufnahme durch die erste Videokamera (11) bei Einfahrt des Fahrzeugs (v) in den Messquerschnitt (MCS) und eine Aufnahme durch die zweite Videokamera (12) bei Ausfahrt des Fahrzeugs (V) aus dem Messquerschnitt (MCS) auslösbar ist.

4. Messanlage (10) nach einem der Ansprüche 1 bis 3, wobei für eine Fahrbahn (R), neben welcher ein angrenzender Seitenstreifen (SL, SR) angeordnet ist, dem Seitenstreifen (SL, SR) ein Fahrzeugdetektor (14) zugeordnet ist, wobei eine erste und zweite Videokamera (11, 12) derart ausgerichtet und vom Messquerschnitt (MCS) beabstandet sind, dass auf deren den Messquerschnitt (MCS) aufgenommenen Videobildern auch der Seitenstreifen (SL, SR) abgebildet ist.

5. Messanlage (10) nach einem der Ansprüche 1 bis 4, wobei das Bildauswertungssystem dazu ausgebildet ist, anhand eines Zeichenvergleichs zu überprüfen, ob es sich bei der ersten Zeichenfolge und der zweiten Zeichenfolge um eine übereinstimmende Zeichenfolge handelt, und bei festgestellter Übereinstimmung die übereinstimmende Zeichenfolge dem passierenden Fahrzeug (V) als Kennzeichen (N) zuzuordnen.

6. Messanlage (10) nach Anspruch 5, wobei das Bildauswertungssystem dazu ausgebildet ist, für eine bestimmte Zeichenfolge ein Konfidenzniveau zu berechnen, das die Wahrscheinlichkeit angibt, mit welcher die Zeichenfolge mit dem durch das Kennzeichenschild (NPF, NPE) dargestellten Kennzeichen (N) übereinstimmt, und bei nicht festgestellter Übereinstimmung der ersten mit der zweiten Zeichenfolge deren Konfidenzniveaus mit einem vorgebbaren Schwellenwert zu vergleichen, und diejenige der Zeichenfolgen dem passierenden Fahrzeug (V) als Kennzeichen (N) zuzuordnen, deren Konfidenzniveau den Schwellenwert übersteigt.

7. Messanlage (10) nach Anspruch 6, wobei das Bildauswertungssystem dazu ausgebildet ist, bei sowohl nicht festgestellter Übereinstimmung der ersten mit der zweiten Zeichenfolge als auch bei nicht festgestellter Überschreitung des Schwellenwertes durch die Konfidenzniveaus der Zeichenfolgen, eine Kombination aus erster und zweiter Zeichenfolge auf Übereinstimmung mit einer aus einer Vielzahl an in einer Datenbank (15) hinterlegten Kombinationen, deren Zeichenfolgen als übereinstimmende Zeichenfolge verifiziert sind, zu überprüfen, und bei festgestellter Übereinstimmung die übereinstimmende Zeichenfolge dem passierenden Fahrzeug (V) als Kennzeichen (N) zuzuordnen.

8. Messanlage (10) nach Anspruch 7, wobei das Bildauswertungssystem Bildausgabemittel zur vergleichenden Ausgabe von aufgenommenen Videobildern des ersten Kennzeichenschildes (NPF) mit solchen des zweiten Kennzeichenschildes (NPE) des Fahrzeugs (V) sowie Eingabemittel aufweist, die es einer Bedienperson erlauben, eine Kombination aus erster und zweiter, anhand des Bildvergleichs als mit dem Kennzeichen (N) übereinstimmend verifizierter Zeichenfolge in der Datenbank abzuspeichern.

## Claims

1. Measuring device (10) for detecting a registration number (N) associated with a vehicle (V) passing a measuring cross-section (MCS) of a roadway (R), comprising a first video camera (11) for recording video images of the measuring cross-section (MCS), which is arranged and aligned such that a first number plate (NPF) of the vehicle (V) displaying the registration number (N) is reproduced on recorded video images, a second video camera (12) for recording video images of the measuring cross-section (MCS), which is arranged and aligned such that a second number plate (NPF) of the vehicle (V) displaying the registration number (N) is reproduced on recorded video images, an image analysis system which is designed to determine a first character string from the recorded video images of the first number plate (NPF), to determine a second character string from the recorded video images of the second number plate (NPF), and based on the first and second character strings to determine the registration number (N) associated with the passing vehicle (V), **characterised in that** for a roadway (R) with multiple traffic lanes (LL, LR) a first video camera (11), a second video camera (12) and a vehicle detector (14) are associated in each case with each of the traffic lanes (LL, LR), wherein video cameras (11, 12) associated with traffic lanes (LL, LR) bordering one another are aligned and spaced apart from the measuring cross-section (MCS) such that their recorded video images overlap at least partially and have a shared display window in the region of the lane separator (LM), the width of which is at least the width (WNP) of a number plate (NPF, NPE).

2. Measuring device (10) according to claim 1, wherein the first video camera (11) is arranged downstream of the measuring cross-section (MCS) and is aligned opposite the direction of travel (D) of the vehicle (V) onto the measuring cross-section (MCS), in order to record the first number plate (NPF) mounted on the front (F) of a vehicle, and wherein the second video camera (12) is arranged upstream of the measuring cross-section (MCS) and is aligned in the direction of travel (D) of the vehicle (V) onto the measuring cross-section (MCS), in order to record the second number plate (NPE) mounted on the rear (E) of a vehicle.

3. Measuring device (10) according to claim 1 or 2, wherein a vehicle detector (14) is associated with the measuring cross-section and is designed to temporally resolve the entry of a vehicle (V) into the measuring cross-section (MCS) from the exit of the vehicle (V) from the measuring cross-section (MCS), and which is operatively connected to the first and the second video camera (11, 12) such that a recording by the first video camera (11) on entry of the vehicle (V) into the measuring cross-section (MCS) and a recording by the second video camera (12) on exit of the vehicle (V) from the measuring cross-section (MCS) can be resolved.

4. Measuring device (10) according to one of claims 1 to 3, wherein for a roadway (R), beside which an adjacent hard shoulder (SL, SR) is arranged, a vehicle detector (14) is associated with the hard shoulder (SL, SR), wherein a first and second video camera (11, 12) are aligned and are spaced apart from the measurement cross-section (MCS) such that the hard shoulder (SL, SR) is also reproduced on their video images recording the measurement cross-section (MCS).

5. Measuring device (10) according to one of claims 1 to 4, wherein the image analysis system is designed to verify, based on a character comparison, whether the first string and the second string are a matching character string, and if a match is established to assign the matching character string to the passing vehicle (V) as a registration number (N).

6. Measuring device (10) according to claim 5, wherein the image analysis system is designed to calculate for a given character string a confidence level which indicates the probability with which the character string matches the registration number (N) displayed by the number plate (NPF, NPE), and if no match is established between the first and the second character string to compare the confidence levels thereof with a predetermined threshold value, and to assign to the passing vehicle (V) as a registration number (N) those character strings whose confidence level exceeds the threshold value.

7. Measuring device (10) according to claim 6, wherein the image analysis system is designed, both when no match is established between the first and the second character string and when it is not established that the confidence level of the character strings exceeds the threshold value, to verify a combination of the first and second character string for a match with one of a plurality of combinations stored in a database (15), whose character strings are verified as a matching character string, and if a match is established to assign the matching character string to the passing vehicle (V) as a registration number (N).

8. Measuring device (10) according to claim 7, wherein the image analysis system has image output means for the comparative output of recorded video images of the first number plate (NPF) with those of the second number plate (NPE) of the vehicle (V) and input means which allow an operator to save a combination of first and second character string in the database which, based on the image comparison, has been verified as matching the registration number (N).

## Revendications

1. Installation (10) de mesure pour relever une immatriculation (N) associée à un véhicule (V) au passage d'une section (MCS) transversale de mesure d'une voie (R) de circulation, comprenant une première caméra (11) vidéo d'enregistrement d'images vidéo de la section (MCS) transversale de mesure, qui est disposée et conçue de manière à reproduire sur des images vidéo enregistrées une première plaque (NPF) d'immatriculation du véhicule (V) représentant l'immatriculation (N), une deuxième caméra (12) vidéo d'enregistrement d'images vidéo de la section (MCS) transversale de mesure, qui est disposée et conçue pour reproduire sur des images vidéo enregistrées une deuxième plaque (NPE) d'immatriculation du véhicule (V) représentant l'immatriculation (N), un système d'exploitation d'images, qui est constitué pour déterminer une première suite de caractères à partir des images vidéo enregistrées de la première plaque (NPF) d'immatriculation, pour déterminer une deuxième suite de caractères à partir des images vidéo enregistrées de la deuxième plaque (NPR) d'immatriculation et pour déterminer l'immatriculation (N) affectée au véhicule (V) qui passe à l'aide de la première et de la deuxième suites de caractères, **caractérisé en ce que**, pour une voie (R) de circulation ayant plusieurs bandes (LL, LR) de circulation, il est affecté à chacune des bandes (LL, LR) respectivement une première caméra (11) vidéo, une deuxième caméra (12) vidéo et un détecteur (14) de véhicule, des caméras (11, 12) vidéo affectées à des bandes (LL, LR) de circulation voisines l'une de l'autre, étant agencées et étant à distance de la section (MCS) transversale de mesure de manière à ce que leurs images vidéo enregistrées se chevauchent au moins en partie et aient dans la région de la ligne de démarcation une partie d'images commune, dont la largeur correspond au moins à la largeur (WNP) d'une plaque (NPF, NPE) d'immatriculation.

2. Installation (10) de mesure suivant la revendication 1, dans laquelle la première caméra (11) vidéo est disposée en aval de la section (MCS) transversale de mesure et est dirigée sur la section (MCS) transversale de mesure dans le sens contraire au sens (D) de marche du véhicule (V), pour enregistrer la première plaque (NPF) d'immatriculation montée à l'avant (F) d'un véhicule, et dans laquelle la deuxième caméra (12) vidéo est montée en amont de la section (MCS) transversale de mesure et est dirigée sur la section (MCS) transversale de mesure dans le sens (D) de marche du véhicule (V) pour enregistrer la deuxième plaque (NPE) d'immatriculation montée à l'arrière (E) du véhicule.

3. Installation (10) de mesure suivant la revendication 1 ou 2, dans lequel il est affecté à la section (MCS) transversale de mesure un détecteur (14) de véhicule, qui est conçu pour séparer dans le temps l'entrée d'un véhicule (V) dans la section (MCS) transversale de mesure de la sortie du véhicule (V) de la section (MCS) transversale de mesure et qui est en liaison de coopération avec la première et la deuxième caméras (11, 12) vidéo de manière à pouvoir séparer un enregistrement par la première caméra (11) vidéo à l'entrée du véhicule (V) dans la section (MCS) transversale de mesure d'un enregistrement par la deuxième caméra (12) vidéo à la sortie du véhicule (V) de la section transversale (MCS) de mesure.

4. Installation (10) de mesure suivant l'une des revendications 1 à 3, dans laquelle, pour une voie (R) de circulation dont est voisine une bande (SL, SR) latérale, il est affecté à la bande (SL, SR) latérale un détecteur (14) de véhicule, une première et une deuxième caméras (11, 12) vidéo étant orientées et disposées à distance de la section (MCS) transversale de mesure de manière à reproduire aussi la bande (SL, SR) latérale sur leurs images vidéo enregistrant la section (MCS) transversale de mesure.

5. Installation (10) de mesure suivant l'une des revendications 1 à 4, dans laquelle le système d'exploitation d'images est conçu pour contrôler au moyen d'une comparaison de caractères si la première suite de caractères et la deuxième suite de caractères sont des suites de caractères qui coïncident et, si une coïncidence est constatée, pour affecter, comme immatriculation (N) au véhicule (V) qui passe, la suite de caractères en coïncidence.

6. Installation (10) de mesure suivant la revendication 5, dans laquelle le système d'exploitation d'images est conçu pour calculer, pour une suite de caractères déterminée, un niveau de confiance, qui indique la probabilité avec laquelle la suite de caractères coïncide avec l'immatriculation représentée par la plaque (NPF, NPE) d'immatriculation et, si une coïncidence de la première à la deuxième suites de caractères n'est pas constatée, pour comparer leur niveau de confiance à une valeur de seuil pouvant être donnée à l'avance et pour affecter, comme immatriculation (N) au véhicule (V) qui passe, celle des suites de caractères, dont le niveau de confiance dépasse la valeur de seuil.

7. Installation (10) de mesure suivant la revendication 6, dans laquelle le système d'exploitation d'images est constitué pour à la fois, si une coïncidence de la première et de la deuxième suites de caractères n'est pas constatée et si un dépassement de la valeur de seuil par le niveau de confiance des suites de caractères n'est pas constaté, contrôler la coïncidence d'une combinaison d'une première et deuxième suites de caractères à l'une d'une pluralité de combinaisons mémorisée dans une base (15) de données, dont les suites de caractères sont vérifiées comme étant des suites de caractères en coïncidence et, si une coïncidence est constatée, affectée comme immatriculation (N) au véhicule (V) qui passe, la suite de caractères en coïncidence.

8. Installation (10) de mesure suivant la revendication 7, dans laquelle le système d'exploitation d'images a des moyens de sortie d'images pour émettre de manière comparative des images vidéo enregistrées de la première plaque (NPF) d'immatriculation à celles de la deuxième plaque (NPE) d'immatriculation du véhicule (V) ainsi que des moyens d'entrée qui permettent à un opérateur de mémoriser dans la base de données une combinaison d'une première et d'une deuxième suites de caractères, vérifiée comme coïncidant avec l'immatriculation (N) au moyen de la comparaison d'images.
